# EUROPEAN PATENT SPECIFICATION

(11) **EP 2 111 382 B1**
(45) Date of publication and mention of the grant of the patent: **08.07.2015**
(21) Application number: 08701993.1
(22) Date of filing: 31.01.2008
(51) Int. Cl.: C04B 35/80, C04B 35/573, F16D 69/02, F16D 65/12, C08J 5/14

(54) **IMPROVEMENTS IN OR RELATING TO BRAKE AND CLUTCH DISCS**
VERBESSERUNGEN BEI ODER BEZÜGLICH BREMS-UND KUPPLUNGSSCHEIBEN
AMÉLIORATIONS CONCERNANT LES DISQUES DE FREIN ET D'EMBRAYAGE

(30) Priority: 31.01.2007 GB 0701847
(43) Date of publication of application: 28.10.2009
(73) Proprietor: Surface Transforms Plc, Ellesmere Port, Cheshire CH66 1ST (GB)
(72) Inventor: FARIA, Julio, Joseph, Kelsall Cheshire CW6 ORF (GB)
(74) Representative: Hall, Matthew Benjamin
(86) International application number: PCT/GB2008/000325
(87) International publication number: WO 2008/093091

(56) References cited:
- EP-A- 0 300 756
- WO-A-2007/012865
- US-A1- 2004 127 600
- US-A1- 2005 011 706
- US-B1- 6 221 475

## Description

This invention relates to a method for manufacturing brake and clutch discs, e.g. for motorised land vehicles or for aircraft, and to novel brake and clutch discs which are obtainable thereby. More particularly it concerns brake and clutch discs comprising carbon fibre-reinforced ceramic material such as may be obtained by using chemical vapour infiltration to generate a carbon matrix around the reinforcing carbon fibres, impregnating the carbon matrix with molten silicon, and thereafter subjecting the siliconised product to a carbon impregnation stage.

Much interest has been shown in the use of carbon fibre-reinforced ceramic brake discs, in particular siliconised carbon-carbon fibre composites, because of their high strength, their ability to maintain excellent physical and frictional properties at high operating temperatures, and their low weight compared to conventional metal discs, for example permitting a weight reduction of 50-70% relative to a standard cast iron disc. Such weight reduction is important in improving performance and fuel economy; by reducing the unsprung weight of a vehicle it may also improve the road holding, handling and comfort of the vehicle. Motor vehicles may likewise benefit from the use of such low weight high friction materials in clutch discs.

Existing commercially available siliconised carbon fibre-reinforced ceramic brake discs are mainly prepared by a "resin char" method in which the reinforcing carbon fibres and a carbonisable resin (e.g. pitch or a phenolic resin) are hot moulded together to approximately the desired shape, and the resulting moulded preform is carbonised (e.g. by heating to *ca.* 1000°C under an inert atmosphere or *in vacuo*), and optionally graphitised (e.g. by heating to ≥ 2000°C). The resulting green bodies may then be shaped and/or joined together as appropriate, and are siliconised, for example by at least partial immersion in a bath of molten silicon or by a hot isostatic pressure treatment involving encapsulation with excess silicon in an evacuated container which is then subjected to high temperature and isostatic pressure.

Resin char procedures have the advantage of being relatively simple to operate, but do suffer a number of disadvantages. Thus the mould is normally filled with randomly oriented short carbon fibres, typically having an average length of less than 30 mm, more commonly less than 25 mm. The fibres may, for example, be chopped from matchstick-like aggregates of carbon fibres which have been preimpregnated with resin; alternatively dry fibres chopped from a carbon fibre fabric such as a felt may be used, in which case resin is separately injected into the mould. It will be appreciated that the random orientation of the short carbon fibres necessarily limits the reproducibility of products obtained using resin char procedures.

Another disadvantage is that the resin tends to shrink away from and expose some of the carbon fibre content during carbonisation. The integrity of such exposed fibres may be damaged by reaction with silicon in the subsequent siliconisation step.

The need to use a mould also puts practical limitations on the procedure, since any desired changes to the shape of the product will necessitate potentially expensive retooling.

It is known in the art that chemical vapour infiltration may be used as an alternative to resin char processing in order to form carbon-carbon fibre composites, although it is generally considered to be unduly complicated and too expensive for more than highly specialised uses such as the manufacture of carbon-carbon fibre composite brake discs for aircraft. The manufacture of such discs typically involves generation of an initial carbon fibre preform which is then subjected to a sequence of chemical vapour infiltration steps, for example using methane as the source of pyrolitic carbon. A sequence of steps is needed because the depositing carbon tends to block the pores between the reinforcing fibres, thereby halting carbon uptake. Initial saturation typically occurs after 10-14 days; by this time the preform may have a density of the order of 0.9-1.6 g/cm³ and will not yet have sufficient strength or integrity for use as a brake disc. It is therefore normal practice to remove the partially densified preform from the furnace and machine its surfaces in order to reopen the blocked pores, whereafter chemical vapour infiltration may be resumed. At least one further machining step and a third chemical vapour infiltration stage are normally required in order to obtain a disc with an acceptable density of around 1.7-1.9 g/cm³; the total processing time is typically of the order of 150 days. U.S. Patent No. 6,878,331 confirms that chemical vapour infiltration generally has to be repeated three to five times before the desired density is achieved.

Discs obtaining in this way are not siliconised, and function well as aircraft brakes. They are, however, inappropriate for use in land vehicles, since they exhibit poor frictional properties at ambient temperatures and so cannot be used to provide occasional light braking.

It has hitherto been thought that even chemical vapour infiltration-generated discs which are intended to be siliconised require at least two stages of infiltration to be performed. Thus it is noted in U.S. Patent No. 6,030,913 that if chemical vapour infiltration is used only once per process, then microcracks remain in the deposited pyrocarbon layer and permit unwanted penetration of silicon during siliconisation. It is observed that multistage infiltration to overcome this problem is very costly.

Whilst U.S. Patent No. 6,110,535 describes a technique for delivering a molten silicon composition into porous substrates of carbon composite material which may be obtained by densification using chemical vapour infiltration, this is normally the first step of a two stage densification process and is followed by a resin char densification so as to form grains of coke in the pores of the residual pore space remaining after the chemical vapour infiltration.

A further route to carbon-carbon fibre composite materials is the wetting monomer infiltration process described in, for example, WO-A-9964361 and U.S.

Patent No. 6,756,112. In this process the carbon fibre preform is impregnated with one or more monomers, for example polynuclear aromatic hydrocarbons such as naphthalene, preferably together with a polymerisation catalyst such as a Lewis acid. The impregnated preform is then heated to promote polymerisation of the monomer(s), and the resulting polymer is then carbonised by further heating.

This sequence of impregnation, polymerisation and carbonisation steps is generally repeated several times in order to achieve the desired degree of densification. Thus a total of four cycles conducted over 4-5 days is typically employed to provide carbon-carbon fibre composites with densities of the order of 1.8 g/cm³; a representative density after the first cycle is around 1.4 g/cm³. The products are said to compare favourably with composites prepared by multistage chemical vapour infiltration procedures carried out over a total period of 6-8 months.

In our International Patent Application No. PCT/GB2006/002815, we describe our unexpected finding that highly effective siliconised carbon-carbon fibre composite brake and clutch discs may in fact be manufactured by siliconisation of incompletely densified preforms which have undergone densification by only a single chemical vapour infiltration step. It is therefore possible to reduce the chemical vapour infiltration processing time from around 150 days to as little as, for example, seven days or less; this greatly reduces process operating costs and permits the manufacture of brake and clutch discs with highly advantageous properties at costs comparable to those of procedures using resin char processing. The reduced operating costs make the products commercially viable for application to motorised land vehicles, including both road going and racing cars and motorbikes, as well as vans, lorries, buses and coaches, military vehicles and railway engines, coaches and trucks.

The present invention is based on our finding that advantageous products may be obtained if siliconised incompletely densified preforms prepared in accordance with the aforesaid International Patent Application are subjected to a carbon impregnation step.

Such treatment may be particularly advantageous in enhancing the lifetime and performance of aircraft brake discs, for example their wear resistance and frictional performance. Such brake discs may reach extremely high operating temperatures during landing, on occasions exceeding the melting point of silicon (1410°C). Under such conditions free silicon within a siliconised carbon-carbon fibre composite disc may melt in the region of the disc surface, where it may either react to form silicon carbide or solidify as a thin film. The former possibility may lead to increased wear of cooperating brake components by virtue of the highly abrasive nature of silicon carbide, whilst the latter may compromise the frictional properties of the disc.

Carbon impregnation in accordance with the present invention may obviate this problem by reacting with and/or coating residual free silicon or otherwise providing a reserve of carbon within the disc structure to react with such free silicon should the disc temperature exceed the melting point of silicon during use. It may also be used to control the carbon/silicon and carbon/silicon carbide ratios so as to provide an optimal balance between hardness, wear resistance and abrasive properties.

Thus according to one aspect of the invention there is provided a method for the manufacture of a carbon fibre-reinforced ceramic brake or clutch disc which comprises preparing a carbon fibre preform having dimensions which substantially correspond to those of the desired disc, densifying said preform with carbon using only a single chemical vapour infiltration step, wherein the densified preform has a density of 0.9-1.6 g/cm³, optionally graphitising said densified preform, siliconising said densified preform by reaction with molten silicon, and subjecting said siliconised densified preform to a carbon impregnation step.

A major advantage of the process of the invention is that, by avoiding the use of moulds, minimal constraints are placed on the shape of the carbon fibre preform, which may be varied as required without the need for major retooling, thereby rendering the manufacturing process highly versatile.

There are similarly no constrains on the length of the carbon fibres which may be used. The preforms may therefore advantageously consist essentially of long fibres, for example having an average length of at least 50 mm, preferably at least 75, 100, 125, 150 or 250 mm, since long fibres enhance the strength and integrity of the product. Without wishing to be bound by theoretical considerations, it may be that the presence of long fibres is beneficial in ensuring that the products remain free from structural defects such as microcracks in contrast to the single stage chemical vapour infiltration-generated prior art products discussed in the aforementioned US Patent No. 6,030,913.

It is particularly preferred that the reinforcing carbon fibres are essentially continuous, i.e. that the average fibre length is equal to or exceeds the radial distance between the inner and outer peripheries of the disc. A particularly simple method of preparing such a continuous fibre preform is to cut it from a continuous sheet or cylinder of carbon fibre fabric, for example a woven fabric or a non-woven felt comprising alternating layers of carbon fibres laid at different angles, e.g. 0° and 90°.

Densification of the preform by a single chemical vapour infiltration step may be conducted in *per se* known manner in an appropriate furnace, which is preferably highly lagged to ensure that heating costs are kept as low as possible. Low molecular weight hydrocarbons such as methane, propane or butane or mixtures of any of these gases may, for example, be used as pyrolytic carbon source and may, for example, be applied in conjunction with a carrier gas such as nitrogen. For cost reasons use of methane may be preferred. The process may, for example, be operated at a temperature of about 1100°C, e.g. 1100±100°C, for a period of up to 21 days, preferably 7-14 days, during which time the density of the preform will typically increase from an initial 0.3-0.6 g/cm³ to a value in the range 0.9-1.6 g/cm³.

It will be appreciated that the morphology of the carbon matrix laid down during chemical vapour infiltration can be varied by appropriate control of the operating temperature and pressure, in a manner which is not possible when using a resin char process. The reactivity of the matrix may be modified in this way, permitting "fine tuning" of the relative carbon, silicon and silicon carbide contents of the siliconised matrix in order to optimise the structural and frictional properties of the end product.

If desired, the partially densified preforms may be graphitised prior to siliconisation, for example by heat treatment at *ca.* 2000°C or above, e.g. up to 2400°C, under non-oxidising conditions, e.g. under an inert gas such as argon or *in vacuo,* for example for a period of about 96 hours at peak temperature.

Siliconisation may be effected in any appropriate manner such as is known in the art. For ease of operability a dip process in which the optionally graphitised partially densified preform is at least partially immersed in a bath of molten silicon or a hot isostatic pressing procedure may be preferred. The density of the siliconised product may, for example, be 1.9-2.4 g/cm³.

The product may be machined to its desired final dimensions either before or after siliconisation. The former option may be preferred since the presiliconisation intermediate product is less hard and therefore more readily machinable than the siliconised end product.

Carbon impregnation of the siliconised densified preform is preferably effected in a single stage, for example by chemical vapour infiltration or by liquid infiltration.

Chemical vapour infiltration may be performed in similar manner to that described above in context of the preform densification stage.

Liquid infiltration may be effected using wetting monomer infiltration as described in the aforementioned WO-A-9964361 and U.S. Patent No. 6,756,112.

Wetting monomers which may be used include furfural and polynuclear aromatic hydrocarbons, for example containing a total of 2-4 fused benzene rings, a portion of which may be hydrogenated, and optionally carrying one or more ring substituents such as C₁₋₄ alkyl (e.g. methyl or ethyl) groups. Representative examples of such hydrocarbons include naphthalene, methylnaphthalene, tetrahydronaphthalene, phenanthrene, anthracene and pyrene; the use of naphthalene may be advantageous for reasons of its ease of handling and relatively low cost. It will be appreciated that monomers having a relatively low melting point, for example not exceeding 225°C, preferably not exceeding 175°C, may facilitate processing in order to impregnate the preform. The use of partially hydrogenated hydrocarbons such as 1,2,3,4-tetrahydronaphthalene which are liquid at ambient temperature may likewise be advantageous.

Impregnation may be effected by dipping or immersing the preform in liquid or molten monomer(s) until the desired amount of monomer(s) has passed into or been taken up through capillary attraction into the preform. Impregnation times of 2-10 hours, for example 1-5 hours, may be appropriate, depending on factors such as the dimensions of the preform and the nature and temperature of the monomer(s).

Polymerisation of the impregnated monomer may be effected by heating, for example to a temperature in the range 300-500°C; reaction times of about 2-6 hours, for example *ca.* 4 hours, may be appropriate. The resulting polymer matrix may then be carbonised by further heating, for example to a temperature in the range 700-1400°C, e.g. over a period of 6-24 hours, such as 10-18 hours. The total processing time for the wetting monomer infiltration process, i.e. comprising the impregnation, polymerisation and carbonisation steps, is advantageously about 12-36 hours, preferably 20-30 hours, more preferably about 24 hours.

Alternatively the siliconised densified preform may be directly impregnated with a liquid (including molten) polymer or resin, preferably having a relatively low molecular weight (for example less than 5,000, preferably less than 3,000 or 2,500) and correspondingly relatively low viscosity, which is then carbonised by heating as described above.

Carbon fibre-reinforced ceramic brake and clutch discs obtainable in accordance with the method of the invention are new and useful products and constitute a feature of the invention in their own right. Unlike products obtained using conventional resin char processing, the carbon matrix of the present products exhibits particularly high levels of adherence to the reinforcing fibres. The fibres are therefore well protected against unwanted interaction with silicon during siliconisation, and the products exhibit substantially enhanced strength and integrity compared to those of the prior art. Any free silicon content is effectively locked into the discs as a result of the carbon impregnation treatment, which may thus limit migration of silicon to the disc surface at operating temperatures which exceed the melting point of silicon.

Thus according to a further feature of the invention there is provided a siliconised carbon-carbon fibre composite brake or clutch disc characterised in that it contains impregnated carbon which overlies the silicon content.

Whereas the carbon matrix in resin char products of the prior art predominantly comprises amorphous glassy carbon, the matrix carbon content of the present products is comparatively more ordered, generally being in an isotropic, rough laminar or smooth laminar form. This is advantageous in that it permits more even and controlled interactions with silicon during siliconisation, permitting the manufacture of more uniform and reproducible products.

## Claims

1. A method for the manufacture of a carbon fibre-reinforced ceramic brake or clutch disc which comprises preparing a carbon fibre preform having dimensions which substantially correspond to those of the desired disc, densifying said preform with carbon using only a single chemical vapour infiltration step, wherein the densified preform has a density of 0.9-1.6 g/cm³, optionally graphitising said densified preform, siliconising said densified preform by reaction with molten silicon, and subjecting said siliconised densified preform to a carbon impregnation step.

2. A method as claimed in claim 1, wherein the average length of the carbon fibres within the preform is at least 50 mm.

3. A method as claimed in claim 1, wherein the average length of the carbon fibres within the preform is equal to or exceeds the radial distance between the inner and outer peripheries of the disc.

4. A method as claimed in claim 1, 2 or 3, wherein the preform is cut from a continuous sheet or cylinder of carbon fibre fabric, preferably from a continuous sheet which is a non-woven felt.

5. A method as claimed in any of claims 1 to 4, wherein the initial preform has a density of 0.3-0.6 g/cm³.

6. A method as claimed in any of claims 1 to 5, wherein the preform is densified by a single chemical vapour infiltration step carried out for a total of up to 21 days.

7. A method as claimed in claim 6, wherein the said infiltration step is carried out for a total of 7-14 days.

8. A method as claimed in any of claims 1 to 7 wherein the densified preform is machined to the dimensions of the desired disc prior to the reaction with molten silicon.

9. A method as claimed in any of claims 1 to 8 wherein the reaction with molten silicon is carried out by at least partially immersing the densified preform in a bath of molten silicon or by encapsulation with excess silicon in an evacuated container which is subjected to high temperature and isostatic pressure.

10. A method as claimed in any of claims 1 to 9 wherein the siliconised densified preform has a density of 1.9-2.4 g/cm³.

11. A method as claimed in any of claims 1 to 10 wherein the siliconised densified preform is machined to the dimensions of the desired disc.

12. A method as claimed in any of claims 1 to 11 wherein the siliconised densified preform is subjected to a carbon impregnation step which is a single stage chemical vapour or liquid infiltration, and preferably said chemical vapour infiltration is carried out for a total of 7-14 days.

13. A method as claimed in claim 12 wherein said liquid infiltration is a wetting monomer infiltration which is carried out over a total of 12-36 hours, preferably over a total of about 24 hours.

14. A carbon fibre-reinforced ceramic brake or clutch disc obtainable by a process as claimed in any of claims 1 to 13.

## Patentansprüche

1. Verfahren zur Herstellung einer karbonfaserverstärkten Keramik-Bremse oder einer Kupplungsscheibe, welches umfasst Vorbereitung einer Karbonfaser-Vorform, welche Dimensionen hat, welche substantiell korrespondieren zu diesen der gewünschten Scheibe, Verdichten besagter Vorform mit Karbon unter Verwendung nur eines einzigen chemischen Dampfinfiltrationsschritts, wobei die verdichtete Vorform eine Dichte von 0,9-1,6 g/cm³ hat, optional Grafitisierung besagter verdichteter Vorform, Silikonisierung besagter verdichteter Vorform durch die Reaktion mit geschmolzenem Silikon, und Unterziehung besagter silikonisierter verdichteter Vorform durch einen Karbonimprägnationsschritt.

2. Verfahren nach Anspruch 1, wobei die mittlere Länge von den Karbonfasern innerhalb der Vorform zumindest 50 mm ist.

3. Verfahren nach Anspruch 1, wobei die durchschnittliche Länge der Karbonfasern innerhalb der Vorform gleich oder höher als der radiale Abstand zwischen dem inneren und äußeren Umfang der Platte ist.

4. Verfahren nach Anspruch 1, 2 oder 3, wobei die Vorform aus einem kontinuierlichen Bogen oder Zylinder von einem Karbonfasergewebe geschnitten ist, vorzugsweise von einem kontinuierlichen Bogen, welcher ein nichtgewebter Filz ist.

5. Verfahren nach einem der Ansprüche 1 bis 4, wobei die anfängliche Vorform eine Dichte von 0,3 - 0,6 g/cm³ hat.

6. Verfahren nach einem der Ansprüche 1 bis 5, wobei die Vorform durch einen einzigen chemischen Dampfinfiltrationsschritt verdichtet ist, welcher für eine Gesamtdauer von bis zu 21 Tage ausgeführt wird.

7. Verfahren nach Anspruch 6, wobei der genannte Infiltrationsschritt für eine Gesamtdauer von 7-14 Tagen ausgeführt wird.

8. Verfahren nach einem der Ansprüche 1 bis 7, wobei die verdichtete Vorform vor der Reaktion mit dem geschmolzenen Silikon auf die Dimensionen der gewünschten Scheibe bearbeitet ist.

9. Verfahren nach einem der Ansprüche 1 bis 8, wobei die Reaktion mit dem geschmolzenen Silikon durch zumindest teilweise eintauchen der verdichteten Vorform in einem Bad von geschmolzenem Silikon oder durch Einkapselung mit überschüssigen Silikon in einem evakuierten Container, welcher einer hohen Temperatur und einem isostatischen Druck ausgesetzt wird, ausgeführt ist.

10. Verfahren nach einem der Ansprüche 1 bis 9, wobei die silikonisierte verdichtete Vorform eine Dichte von 1,9 - 2,4 g/cm³ hat.

11. Verfahren nach einem der Ansprüche 1 bis 10, wobei die silikonisierte verdichtete Vorform auf die Abmessungen der gewünschten Scheibe bearbeitet ist.

12. Verfahren nach einem der Ansprüche 1 bis 11, wobei die silikonisierte verdichtete Vorform mit einem Karbonimprägnationsschritt bearbeitet ist, welcher ein einziger chemischer Dampf- oder Flüssigkeitsinfiltrationsschritt ist, und vorzugsweise besagte chemische Dampfinfiltration für eine Gesamtdauer von 7 - 14 Tagen ausgeführt wird.

13. Verfahren nach Anspruch 12, wobei besagte Flüssigkeitsinfiltration eine befeuchtete Monomer-Infiltration ist, welche über eine Gesamtdauer von 12 - 36 Stunden ausgeführt ist, vorzugsweise über eine Gesamtdauer von ungefähr 24 Stunden ausgeführt wird.

14. Eine karbonfaserverstärkte Keramik-Bremse oder Kupplungsscheibe, erhältlich durch ein Verfahren nach einem der Ansprüche 1 bis 13.

## Revendications

1. Procédé de fabrication d'un disque de frein ou d'embrayage en céramique renforcée de fibres de carbone, comprenant les étapes consistant à préparer une préforme de fibres de carbone ayant des dimensions qui correspondent sensiblement à celles du disque souhaité, à densifier ladite préforme avec du carbone en n'utilisant qu'une simple étape d'infiltration de vapeur chimique, dans lequel la préforme densifiée a une masse volumique de 0,9 à 1,6 g/cm³, à graphiter éventuellement ladite préforme densifiée, à siliconer ladite préforme densifiée par réaction avec de la silicone fondue et à soumettre ladite préforme densifiée siliconée à une étape d'imprégnation de carbone.

2. Procédé selon la revendication 1, dans lequel la longueur moyenne des fibres de carbone dans la préforme est d'au moins 50 mm.

3. Procédé selon la revendication 1, dans lequel la longueur moyenne des fibres de carbone dans la préforme est égale ou supérieure à la distance radiale entre les périphéries interne et externe du disque.

4. Procédé selon la revendication 1, 2 ou 3, dans lequel la préforme est découpée dans une feuille continue ou un cylindre de tissu de fibres de carbone, de préférence dans une feuille continue qui est un feutre non tissé.

5. Procédé selon l'une quelconque des revendications 1 à 4, dans lequel la préforme initiale a une masse volumique de 0,3 à 0,6 g/cm³.

6. Procédé selon l'une quelconque des revendications 1 à 5, dans lequel la préforme est densifiée par une simple étape d'infiltration de vapeur chimique effectuée sur une période totale allant jusqu'à 21 jours.

7. Procédé selon la revendication 6, dans lequel ladite étape d'infiltration est effectuée sur une période totale de 7 à 14 jours.

8. Procédé selon l'une quelconque des revendications 1 à 7, dans lequel la préforme densifiée est usinée aux dimensions du disque souhaité avant la réaction avec de la silicone fondue.

9. Procédé selon l'une quelconque des revendications 1 à 8, dans lequel la réaction avec de la silicone fondue est effectuée par immersion au moins en partie de la préforme densifiée dans un bain de silicone fondue ou par encapsulation avec de la silicone excédentaire dans un réceptacle placé sous vide qui est soumis à une pression isostatique à température élevée.

10. Procédé selon l'une quelconque des revendications 1 à 9, dans lequel la préforme densifiée siliconée a une masse volumique de 1,9 à 2,4 g/cm³.

11. Procédé selon l'une quelconque des revendications 1 à 10, dans lequel la préforme densifiée siliconée est usinée aux dimensions du disque souhaité.

12. Procédé selon l'une quelconque des revendications 1 à 11, dans lequel la préforme densifiée siliconée est soumise à une étape d'imprégnation de carbone qui est une infiltration de vapeur ou de liquide chimique en une seule étape et, de préférence, ladite infiltration de vapeur chimique est effectuée sur une période totale de 7 à 14 jours.

13. Procédé selon la revendication 12, dans lequel ladite infiltration de liquide est une infiltration d'un monomère mouillant qui s'effectue sur une période totale de 12 à 36 heures, de préférence sur une période totale d'environ 24 heures.

14. Disque de frein ou d'embrayage en céramique renforcée de carbone susceptible d'être obtenu par un procédé selon l'une quelconque des revendications 1 à 13.
